# EUROPEAN PATENT APPLICATION

(11) **EP 4 530 313 A1**
(43) Date of publication of application: **02.04.2025**
(21) Application number: 22958530.2
(22) Date of filing: 19.09.2022
(51) Int. Cl.: C08K 5/5313, C08K 5/5317, C08K 5/3492, C08K 13/04, C08K 3/32, C08L 77/02, C08L 67/02

(54) **DIALKYL PHOSPHINATE COMPOSITION, PREPARATION METHOD THEREFOR, AND USE THEREOF**

(30) Priority: 16.09.2022 CN 202211130397
(71) Applicant: Ningbo Institute of Materials Technology & Engineering, Chinese Academy of Sciences, Ningbo, Zhejiang 315201 (CN)
(72) Inventor: YAO, Qiang, Ningbo, Zhejiang 315201 (CN); CAO, Weihong, Ningbo, Zhejiang 315201 (CN); ZHAO, Yueying, Ningbo, Zhejiang 315201 (CN); TANG, Tianbo, Ningbo, Zhejiang 315201 (CN)
(74) Representative: Huang, Liwei
(86) International application number: PCT/CN2022/119683
(87) International publication number: WO 2024/055340

(57) **Abstract**

Disclosed is a dialkylphosphinic acid salt composition, a preparation method therefor and use thereof. The dialkylphosphinic acid salt composition comprises a diethylphosphinate of formula (I) and a long-chain dialkylphosphinic acid salt of formula (II). The dialkylphosphinic acid salt composition of the present disclosure features easy preparation, small addition amount, high flame-retardant efficiency for polymer materials and good thermal stability. The dialkylphosphinic acid salt composition overcomes the disadvantage of low flame-retardant efficiency of diethylphosphinate for polymer materials as well as the poor thermal stability and more smoke of long-chain dialkylphosphinic acid salt in combustion. The dialkylphosphinic acid salt composition can be widely applied to flame-retard polymer materials which require high-temperature processing.

## Description

### Technical Field

The present disclosure relates to a dialkylphosphinic acid salt composition, a preparation method therefor and use thereof and belongs to the field of preparation of flame-retardant polymer materials.

### Background

Dialkylphosphinic acid salts (Dialkylphosphinates), especially aluminum diethylphosphinate, have been widely used as halogen-free flame retardants for polymer materials. However, except some highly volatile diisobutylphosphinates and dipropylphosphinates, other dialkylphosphinates have limited flame retardant efficiency on polymer materials, and often need to be used together with synergists such that polymer materials reach UL-94 V0.

Patents US6207736, US6255371, US6547992, etc., report diethylphosphinates and ammonium polyphosphate, melamine polyphosphates, and/or inorganic compounds such as zinc stannate-synergized flame-retardant glass-fiber-reinforced polyamides and polyesters. However, the consumption of flame retardants is large, the thermal stability of ammonium polyphosphate is not high, and melamine polyphosphate easily migrates in polymer materials.

Patent US7420007 reports aluminum diethylphosphinate containing 6% or less of telomeric dialkylphosphinates which are dialkylphosphinic acid salts containing long-chain C₄-C₁₀-alkyl. Patent CN104072537B reports a process of removing long-chain dialkylphosphinic acid salts in a process of preparing diethylphosphinates. These patents emphasize the avoidance of the production and use of high-content long-chain dialkylphosphinic acid salts.

The applicant's another application provides a hybrid dialkylphosphinic acid salt prepared using two or more olefins in the same reaction system. The hybrid dialkylphosphinic acid salt prepared has high flame retardant efficiency and good thermal stability, but the preparation and accurate control of the content of each component is not convenient and need to be improved.

Now, surprisingly, the dialkylphosphinic acid salt composition composed of a high content of long-chain dialkylphosphinic acid salt and diethylphosphinate is prepared easily, the content of each component can be controlled simply, the preparation process is highly repeatable, and the dialkylphosphinic acid salt composition has very high flame retardant efficiency and can be used alone to achieve flame retardancy of polymer materials without the help of synergistic agents. It is unexpected that a composition composed of two or more dialkylphosphinic acid salts that have low flame retardant efficiency and cannot obtain a polymer material with a good flame retardant rating endows the polymer material with a high flame retardant rating.

### Summary

In order to solve the above technical problems, the present disclosure provides a dialkylphosphinic acid salt composition, a preparation method therefor and use thereof. The dialkylphosphinic acid salt composition comprises component A and component B. The dialkylphosphinic acid salt composition features easy preparation, simple control over the content of components, small addition amount, high flame-retardant efficiency for polymer materials and desirable cost-effectiveness.

According to a first aspect of the present disclosure, provided is a dialkylphosphinic acid salt composition, comprising component A and component B, the component A being selected from the group consisting of compounds of formula (I) and combinations thereof, the component B being selected from the group consisting of compounds of formula (II) and combinations thereof; 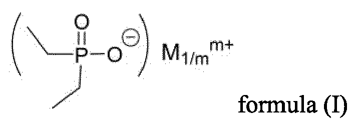 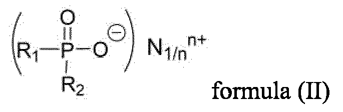 wherein M and N are central atoms; R₁ and R₂ are each independently selected from C₄-C₁₂-alkyl, R₁ and R₂ are identical or different, and at least one of R₁ and R₂ is not isobutyl.

M and N are each independently selected from metal elements; the metal element is selected from the group consisting of group IIA, IIIA, IVA, VA metal elements, a transition metal element, a lanthanide metal element and combinations thereof.

Optionally, R₁ and R₂ are each independently selected from C₄-C₆-alkyl. m and n are valence states of metal M and N, respectively; m and n are each independently 2, 3 or 4.

Optionally, the dialkylphosphinic acid salt composition comprises component A and component B.

Optionally, a molar ratio of the component A to the component B is 1-4.5: 4.5-1.

In the present disclosure, R₁ and R₂ are each independently selected from C₄-C₁₂-alkyl, R₁ and R₂ are identical or different, and at least one of R₁ and R₂ is not isobutyl. The C₄-C₁₂-alkyl may be linear or branched alkyl, including but not limited to, n-butyl, isobutyl, sec-butyl, tert-butyl, n-amyl, isoamyl, neopentyl, sec-amyl, tert-amyl, n-hexyl, isohexyl, sec-hexyl, tert-hexyl, n-heptyl, isoheptyl, sec-heptyl, tert-heptyl, n-octyl, isooctyl, sec-octyl, tert-octyl, n-nonyl, sec-nonyl, tert-nonyl, n-malvyl, isomalvyl, sec-sunflower, tert-malvyl, n-undecyl, isoundecyl, sec-undecyl, tert-undecyl, N-dodecyl, iso-dodecyl, sec-dodecyl, and tert-dodecyl.

Optionally, R₁ and R₂ are each independently selected from the group consisting of n-butyl, isobutyl, sec-butyl, tert-butyl, n-hexyl, isohexyl, sec-hexyl, tert-hexyl, n-heptyl, n-octyl, isooctyl, sec-octyl, tert-octyl and combinations thereof, but not both isobutyl.

Optionally, R₁ and R₂ are each independently selected from the group consisting of n-butyl, isobutyl, sec-butyl, tert-butyl, n-hexyl, isohexyl, sec-hexyl, tert-hexyl and combinations thereof, but not both isobutyl.

Optionally, R₁ and R₂ are each independently selected from the group consisting of n-butyl, isobutyl, sec-butyl, tert-butyl and combinations thereof, but not both isobutyl.

Optionally, the group IIA metal element is selected from the group consisting of Be, Mg, Ca, Sr, Ba and combinations thereof.

The group IIIA metal element is Al.

The group IV A metal element is Sn.

The group VA metal element is Sb.

The transition metal element is selected from the group consisting of Fe, Zn, Cu, Ti, Zr, Mn and combinations thereof.
the lanthanide metal element is Ce.

Optionally, the metal element is selected from the group consisting of Al, Zn, Ca, Fe and combinations thereof.

Optionally, the metal element is selected from the group consisting of Al, Zn, Ca and combinations thereof.

Optionally, the metal element is Al, and m=n=3.

In the present disclosure, the component A is at least one of the diethylphosphinates of formula (I). Here, the component A may be a pure diethylphosphinate, such as aluminum diethylphosphinate, or may be a mixture of diethylphosphinates composed of different metal ions, such as a mixture of aluminum diethylphosphinate and zinc diethylphosphinate/iron diethylphosphonate. Optionally, the component A is a pure diethylphosphinate. Optionally, the component A is aluminum diethylphosphinate.

In the actual preparation process, the diethylphosphinate contains a small number of oligomers, such as ethyl butylphosphinate and ethyl hexylphosphinate. However, as long as the mole number of these oligomers is less than 10 mol% of the total mole number of diethylphosphinate, they have no visible effect on the flame retardant function of diethylphosphinates. Therefore, the diethylphosphinate containing less than or equal to 10 mol% of oligomers in the present disclosure is considered to be a pure diethylphosphinate. The molecular weight of diethylphosphinate is used to calculate the mole number of diethylphosphinate.

In the present disclosure, the component B is at least one of long-chain dialkylphosphinic acid salts of formula (II). Here, the component B may be a pure long-chain dialkylphosphinic acid salt, such as di-n-butylphosphinate, or may be a mixture of dialkylphosphinic acid salts composed of different long-chain alkyls, such as di-n-butylphosphinate and di-n-hexylphosphinate. Further, the component B may be a mixture of long-chain dialkylphosphinic acid salts composed of different metal ions, such as a mixture of aluminum di-n-butylphosphinate and iron di-n-butylphosphinate, or may be a mixture of dialkylphosphinic acid salts having the same chemical formula but in the form of different isomers, such as a mixture of aluminum di-n-butylphosphinate and aluminum n-butyl sec-butylphosphinate.

In the composition of the present disclosure, a molar ratio of the component A to the component B is 1-4.5:4.5-1. When the ratio is greater than 4.5:1 or less than 1:4.5, the flame-retardant efficiency of the composition is not high, and the thermal stability of the composition is reduced when the proportion of diethylphosphinate is too small.

Optionally, the molar ratio of the component A to the component B is 1-4.5:4-1.

Optionally, the molar ratio of the component A to the component B is 1-4.5:3-1.

Optionally, the molar ratio of the component A to the component B is 1-4.5:2-1.

Optionally, the molar ratio of the component A to the component B is 1-4.5:1.

Optionally, the molar ratio of the component A to the component B is 1-4.3:1.

Optionally, the molar ratio of the component A to the component B is 1-4:1.

In the embodiments of the present disclosure, at the same use amount, when the long-chain dialkylphosphinic acid salt and diethylphosphinate are used alone, the prepared polymer materials cannot reach an effective flame retardant rating such as UL-94 V0, but the composition composed of the long-chain dialkylphosphinic acid salt and the diethylphosphinate can endow the prepared polymer material with an excellent flame retardant effect, such as reaching UL-94 V0. This is quite surprising.

The composition of the present disclosure may be obtained by obtaining component A and component B (i.e., diethylphosphinate and long-chain dialkylphosphinic acid salt) respectively, followed by physically mixing the component A and the component B at a certain ratio. The physical mixing process may be performed before the processing of a flame-retardant polymer material, or may be performed during the preparation of the flame-retardant polymer material. For convenience, the composition composed of the component A and the component B obtained by this method is referred to as physical composition.

According to a second aspect of the present disclosure, provided is a preparation method for the dialkylphosphinic acid salt composition, including: causing reaction I on a material comprising a diethylphosphinic acid and/or an alkali metal salt thereof with anions in formula (I), a dialkylphosphinic acid and/or an alkali metal salt thereof with anions in formula (II), a metal element M source and a metal element N source in an aqueous phase to obtain the dialkylphosphinic acid salt composition; alternatively,
mixing component A and component B to obtain the dialkylphosphinic acid salt composition, wherein
the component A is the component A described above; the component B is the component B described above.

In the present disclosure, the particle size of the composition obtained by co-precipitation (i.e., the reaction I in the aqueous phase) is much larger than that of pure aluminum dibutylphosphinate, overcoming the disadvantage of more dust during the physical mixing process.

In the present disclosure, there is no requirement for the amount of water in the co-precipitation reaction, and the amount of water should be enough for precipitating the product.

Optionally, the preparation method includes: causing reaction I on a material comprising a diethylphosphinic acid and/or an alkali metal salt thereof with anions in formula (I), at least one R₁-R₂-phosphinic acid and/or an alkali metal salt thereof with anions in formula (II), a metal element M source and a metal element N source in an aqueous phase to obtain a dialkylphosphinic acid salt precipitate, and then separating and drying the precipitate, thereby obtaining a dialkylphosphinic acid salt composition composed of chemical formulas represented by formula (I) and formula (II). For convenience, the composition prepared by the method is referred to as a co-precipitation composition.

In the present disclosure, a molar ratio of the diethylphosphinic acid and/or the alkali metal salt thereof with anions in formula (I) to the dialkylphosphinic acid and/or the alkali metal salt thereof with anions in formula (II) to the metal element M source to the metal element N source is or approximates the molar ratio of the corresponding components in the dialkylphosphinic acid salt composition described above.

Optionally, the reaction I is carried out at 0-250°C, 0.1 MPa-10 MPa for 0.01-20 h.

Optionally, the reaction I is carried out at a pH of 0 to 4.

Optionally, the metal element is Al, and M=N=Al. The reaction I is carried out at a pH of 0-4, preferably 1-3.5, and more preferably 2.3-3.3.

Specifically, the reaction I does not produce a precipitate if the pH is too low. If the pH is too high, hydroxide of metal ions is formed, and impurities are introduced.

Optionally, the metal element M source is selected from the group consisting of metal element M salts and combinations thereof.

The metal element N source is selected from the group consisting of metal element N salts and combinations thereof.

Optionally, the metal element M salt is selected from the group consisting of nitrates, sulfates, hydrochlorides, acetates and oxides of the metal element M and combinations thereof.

Optionally, the metal element N salt is selected from the group consisting of nitrates, sulfates, hydrochlorides, acetates and oxides of the metal element N and combinations thereof.

Optionally, a molar ratio of the diethylphosphinic acid and/or the alkali metal salt thereof to the R₁-R₂-phosphinic acid and/or the alkali metal salt thereof to the metal element M source to the metal element N source is or approximates a theoretical equivalent calculated from formulas (I) and (II).

The dialkylphosphinic acid salt precipitate is separated by conventional means such as filtration, centrifugation and removal of the liquid phase leaving the solid phase. Drying is carried out by conventional means such as baking.

Optionally, the order of addition of reactants in reaction I may be adjusted freely. For example, the diethylphosphinic acid and/or the alkali metal salt thereof and the R₁-R₂-phosphinic acid and/or the alkali metal salt thereof are mixed firstly, and then react with the metal element M source material and the metal element N source material in the aqueous phase.

Optionally, in reaction I, the diethylphosphinic acid and/or the alkali metal salt thereof and the R₁-R₂-phosphinic acid and/or the alkali metal salt thereof are respectively added to the aqueous phase containing the metal element M source material and the metal element N source material for reaction.

The contents of the component A and the component B in the dialkylphosphinic acid salt composition obtained by the reaction I may be calculated by conventional means such as the original feed amount, the molar ratio of dialkylphosphinate ion and elemental analysis. In simple cases, for example, when the component A is aluminum diethylphosphinate and the component B is aluminum dibutylphosphinate, the resulting composition is dissolved in alkali or acid water firstly, and then the molar ratio of diethylphosphinate ion to dibutylphosphinate ion is determined according to the peak area in a phosphorus nuclear magnetic spectrum, the molar ratio of diethylphosphinate ion to dibutylphosphinate ion is the molar ratio of the component A to the component B. In more complex cases, for example, there are different metal ions, the molar ratio of the component A to the component B may be calculated by additional means such as elemental analysis.

The diethylphosphinic acid and/or the alkali metal salt thereof and the R₁-R₂-phosphinic acid and/or the alkali metal salt thereof may be prepared by known methods. For example, the diethylphosphinic acid and/or the alkali metal salt thereof is prepared by an addition reaction of ethylene with a phosphinic acid and/or an alkali metal salt thereof in an aqueous solution in the presence of a free radical initiator.

In the preparation of the diethylphosphinic acid and/or the alkali metal salt thereof and the R₁-R₂-phosphinic acid and/or the alkali metal salt thereof, at least one of the phosphate ion, phosphite ion, alkylphosphate ion, and alkylphosphinate ion may be produced due to the reaction process. These ions may also form corresponding metal salt precipitates under certain conditions, thereby being brought into the composition. Therefore, optionally, the dialkylphosphinic acid salt composition composed of compounds having structures represented by formulas (I) and (II) further comprises a metal salt formed by an M or N metal ion and at least one of phosphate ion, phosphite ion, alkylphosphate ion, and alkylphosphinate ion. The molar content of these phosphorus-containing metal salts is less than or equal to 10% in the dialkylphosphinic acid salt composition, measured by the mole number of the phosphorus element contained therein. Optionally, the molar content of these phosphorus-containing metal salts in the dialkylphosphinic acid salt composition is less than or equal to 5%.

Preferably, the dialkylphosphinic acid salt composition composed of component A and component B is a co-precipitation composition. The co-precipitation composition has the advantages of large particle size and less dust during use. The disadvantages of the component A and/or the component B with a small particle size and more dust in the physical composition are overcome.

According to a third aspect of the present disclosure, a flame retardant is provided. The flame retardant comprises the dialkylphosphinic acid salt composition described above and/or a dialkylphosphinic acid salt composition prepared by the method described above.

According to a fourth aspect of the present disclosure, a flame-retardant material is provided. The flame-retardant material comprises a flame retardant P and a thermoplastic polymer material;
the flame retardant P is at least one of the flame retardants described above.

Optionally, a mass percent of the flame retardant P in the flame-retardant material is 1%-35%.

Optionally, an upper limit of the mass percent of the flame retardant P in the flame-retardant material is independently selected from 35%, 30%, 25%, 20%, 15%, 10% and 5% and a lower limit is independently selected from 1%, 30%, 25%, 20%, 15%, 10% and 5%.

Optionally, the flame-retardant material comprises 1wt%-35wt% of the flame retardant P and 65wt%-99wt% of the thermoplastic polymer material.

The thermoplastic polymer material in the present disclosure refers to plastics having characteristics of softening by heating and hardening by cooling.

Specifically, the required amount of the flame retardant P depends on the thermoplastic polymer material.

Optionally, the mass percent of the flame retardant P in the flame-retardant material is 3%-20%.

Optionally, the flame-retardant material further comprises a functional additive.

The functional additive is selected from the group consisting of a reinforcing agent, an anti-dripping agent, a stabilizer, a pigment, a dye, a charring catalyst, a dispersant, a nucleating agent, an inorganic filler, an antioxidant and combinations thereof.

Optionally, a mass percent of the functional additive in the flame-retardant material is 5%-40%.

Optionally, an upper limit of the mass percent of the functional additive in the flame-retardant material is independently selected from 40%, 35%, 30%, 25%, 20%, 15% and 10% and a lower limit is independently selected from 5%, 35%, 30%, 25%, 20%, 15% and 10%.

Optionally, the reinforcing agent is glass fibers.

Optionally, the anti-dripping agent is Teflon.

Optionally, the inorganic filler is selected from the group consisting of mica, calcium carbonate, calcium oxide, silica and combinations thereof.

Optionally, the flame-retardant material further comprises a flame retardant Q.
the flame retardant Q is a nitrogen-based flame retardant and/or a boron-based flame retardant.

Optionally, the nitrogen-based flame retardant is selected from the group consisting of melamine cyanurate, melamine polyphosphate, ammonium polyphosphate and combinations thereof.

The boron-based flame retardant is zinc borate.

Optionally, a mass percent of the flame retardant Q in the flame-retardant material is 0.5%-20%.

Optionally, an upper limit of the mass percent of the flame retardant Q in the flame-retardant material is independently selected from 20%, 15%, 10%, 5% and 1% and a lower limit is independently selected from 0.5%, 15%, 10%, 5% and 1%.

Optionally, the thermoplastic polymer material is a polyamide and/or a polyester.

Optionally, the polyamide is selected from the group consisting of aliphatic polyamide, aromatic polyamide, semi-aromatic polyamide, a copolymer of semi-aromatic polyamide and aliphatic polyamide, and combinations thereof.

According to common knowledge in the art, polyamide, also known as nylon, is a generic term for polymers including -NH-C(O)-amide groups in structural units, and is synthesized by condensation or ring-opening reactions of one or more of dicarboxylic acids and one or more of diamines, and/or one or more of amino acids, and/or one or more of lactams. The polyamide is generally classified into aliphatic polyamide, aromatic polyamide and semi-aromatic polyamide according to composition of a main chain. The semi-aromatic polyamide means that at least one monomer structure of its synthetic monomer comprises an aromatic group.

Optionally, the aliphatic polyamide is optionally selected from the group consisting of a copolymer of polyamide 6 and polyamide 66, polyamide 6, polyamide 66 and mixtures thereof.

Optionally, the semi-aromatic polyamide may be prepared from any one or more of aromatic dicarboxylic acids and any one or more of aliphatic diamines, or from any one or more of aromatic diamines and any one or more of aliphatic dicarboxylic acids. One or any more of dicarboxylic acid, diamine, lactam and amino acid may also be optionally added to the system, to prepare polyamide copolymers with corresponding properties. The added dicarboxylic acid is aromatic dicarboxylic acid and/or aliphatic dicarboxylic acid. The added diamine is aromatic diamine and/or aliphatic diamine. The added lactam may be aliphatic lactam or aromatic lactam. The added amino acid may be aromatic amino acid or aliphatic amino acid.

Optionally, the semi-aromatic polyamide is prepared from one or more aromatic dicarboxylic acids optionally selected from terephthalic acid, isophthalic acid, and naphthalenedicarboxylic acid, and one or more aliphatic diamines optionally selected from butylene diamine, hexane diamine, octane diamine, decane diamine, and 2-methylpentylene diamine.

Optionally, the semi-aromatic polyamide is prepared from aliphatic diamine, aromatic dicarboxylic acid, and aliphatic dicarboxylic acid.

Optionally, the semi-aromatic polyamide is prepared from aliphatic diamine and aromatic dicarboxylic acid. Optionally, aliphatic dicarboxylic acid may also be added, and a mole fraction of aliphatic dicarboxylic acid accounts for 0-45% of the total amount of dicarboxylic acid, that is, the mole number of aliphatic dicarboxylic acid/(the mole number of aliphatic dicarboxylic acid+the mole number of aromatic dicarboxylic acid)=0-45%.

Optionally, the aromatic dicarboxylic acid is optionally selected from the group consisting of terephthalic acid, isophthalic acid, naphthalenedicarboxylic acid and combinations thereof; the aliphatic diamine is optionally selected from the group consisting of butylene diamine, hexane diamine, octane diamine, decane diamine, 2-methylpentylene diamine and combinations thereof; the aliphatic dicarboxylic acid is optionally selected from the group consisting of adipic acid, succinic acid, sebacic acid, suberic acid and combinations thereof.

Optionally, the polyamide is optionally selected from the group consisting of polyhexamethylene terephthalamide (PA6T), polyhexamethylene isophthalamide (PA6I), a terephthalic acid/hexamethylenediamine/caprolactam copolymer (PA6T/6), a terephthalic acid/hexamethylenediamine/adipic acid copolymer (PA6T/66), a terephthalic acid/hexamethylenediamine/adipic acid/isophthalic acid copolymer (PA6T/6I/66), Poly(iminocarbonyl-1,4-phenylenecarbonylimino-1,9-nonanediyl) (PA9T), polydecanediamide terephthaloyl (PA10T), polydodecylenediamine terephthaloyl (PA12T), a terephthalic acid/hexamethylenediamine/dodecylactam copolymer (PA6T/12), poly-adipic acid meta-xylenediamine (MXD6), a terephthalic acid/hexamethylenediamine/2-methylpentylenediamine copolymer (PA6T/2-MPMDT), a terephthalic acid/2,2,4-trimethylhexamethylenediamine/2,4,4-trimethylhexamethylenediamine copolymer, and combinations thereof.

Optionally, the aliphatic polyamide is selected from the group consisting of polyamide 6, polyamide 66, a copolymer of polyamide 6 and polyamide 66, and combinations thereof.

Optionally, the semi-aromatic polyamide is polyphthalamide (PPA).

Optionally, the polyester is polybutylene terephthalate (PBT).

The present disclosure have the following beneficial effects.
(1) The dialkylphosphinic acid salt composition composed of component A and component B provided in the present disclosure features small addition amount, high flame-retardant efficiency for polymer materials and desirable cost-effectiveness. The present disclosure overcomes the disadvantage of low flame retardant efficiency of diethylphosphinate and long-chain dialkylphosphinic acid salt for polymer materials as well as the poor thermal stability of long-chain dialkylphosphinic acid salt used along. The dialkylphosphinic acid salt composition of the present disclosure can be widely applied to flame-retard polymer materials which require high-temperature processing.
(2) The dialkylphosphinic acid salt composition composed of component A and component B provided in the present disclosure is prepared simply and the proportions of different components can be accurately controlled to ensure the stability of the physical properties of the flame-retardant material.

### Brief Description of the Drawings

FIG. 1 is a ³¹P-NMR spectrum of an aluminum dialkylphosphinate composition prepared in Example 2 after alkali hydrolysis.
FIG. 2 is an XRD pattern of aluminum dialkylphosphinate compositions prepared in Examples 1-3.

### Detailed Description of the Embodiments

The present disclosure is described in detail below in conjunction with examples, but the present disclosure is not limited to these examples.

Unless otherwise specified, raw materials in the examples of the present disclosure were purchased commercially.

The raw materials used in the examples are as follows:
PA66 (also known as polyamide 66 or nylon 66): Zytel 70G35 HSL NC010 from DuPont, American, where a glass fiber content is 35% by weight.

PA6 (also known as polyamide 6 or nylon 6): Zytel 73G30L NC010 from DuPont, American, where a glass fiber content is 30% by weight.

Aluminum diethylphosphinate: Exolit OP1230, D₅₀=30.80µm, from Clariant, Germany. Zinc diethylphosphinate: Clariant, Germany.

Antioxidant 1010: tetrakis[β-(3,5-di-tert-butyl-4-hydroxyphenyl) propionic acid]pentaerythritol ester, from Shanghai Macklin Biochemical Co., Ltd.

Antioxidant 168: tris[2,4-di-tert-butyl phenyl] phosphite, from Strem Chemicals, Inc., American.

Composite antioxidant: prepared by mixing the antioxidant 1010 (tetrakis[beta-(3, 5-di-tert-butyl-4-hydroxyphenyl) propionic acid] pentaerythritol ester) and the antioxidant 168 (tris[2, 4-di-tert-butylphenyl] phosphite) in a weight ratio of 1:1.

Combustion test standard: GB/T 2408-2008 standard.

Nuclear magnetic resonance (NMR) test: using an instrument with a model of AVANCE III 400MHz, from Bruker, Germany.

Phosphorus nuclear magnetic resonance spectrum (³¹P-NMR) test method: pre-delay D1=10 seconds, scanning is performed for 32 times, and a peak area ratio is regarded as a ratio of mole number of various phosphonate ions.

Model of an instrument for X-ray diffraction (XRD) test: D8 ADVANCE DAVINCI, from Bruker, Germany.

Particle size D50: Laser particle size analyzer Heloise-oasis HELOS (H3938), from Sympatec, Germany, dry test.

### Example 1

### Preparation of aluminum dialkylphosphinate composition, in which a molar ratio of aluminum diethylphosphinate of formula (I) to aluminum dibutylphosphinate of formula (II) was 1.2:1

Preparation of sodium diethylphosphinate: 100 g of sodium hypophosphite monohydrate was dissolved in 500 g of water, and then placed into a 1 L stainless steel pressure reactor. The reactor was purged by nitrogen twice, vacuumized, and subsequently filled with ethylene to 0.8 MPa. A reaction solution was heated to about 90° C. Then an aqueous solution of sodium persulfate with a mass concentration of 4% was injected at a constant speed of 10 ml/h. Ethylene was continuously introduced into the reactor. The amount of ethylene introduced was measured by a gas flow meter. After 8 hours, the pressure of the reactor did not drop. The reaction was stopped, and a transparent reaction solution was obtained after cooled, release of pressure, N₂ purging, and discharging.

Preparation of sodium dibutylphosphinate: 100 g of sodium hypophosphite monohydrate was dissolved in 500 g of water, and then placed into a 1 L stainless steel pressure reactor. The reactor was purged by nitrogen twice, vacuumized, and subsequently filled with butene until pressure no longer rose. A reaction solution was heated to about 90° C. Then an aqueous solution of sodium persulfate with a mass concentration of 4% was injected at a constant speed of 10 ml/h. Butene was continuously introduced into the reactor. The amount of butene introduced was measured by a gas flow meter. After 25.5 hours, the pressure of the reactor did not drop. The reaction was stopped, and a transparent reaction solution was obtained after cooled, release of pressure, N₂ purging, and discharging.

Preparation of aluminum dialkylphosphinate composition: 135.37 g of the above sodium diethylphosphinate solution (0.18 mol of phosphorus) and 164.52 g of the above sodium dibutylphosphinate solution (0.18 mol of phosphorus) were well mixed and then slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water and then dried at 120 °C to obtain 50.06 g of white solid, the aluminum dialkylphosphinate composition.

The aluminum dialkylphosphinate composition obtained in this experiment was dissolved in an aqueous solution of sodium hydroxide. Phosphorus nuclear magnetic resonance was performed, resulting in that the molar content of diethylphosphinate ion was 54.55%, the total molar content of dibutylphosphinate ion was 45.45%. That is, in the aluminum dialkylphosphinate composition, the molar ratio of aluminum diethylphosphinate of formula (I) to aluminum dibutylphosphinate of formula (II) was 1.2:1.

An XRD test was performed on the the prepared aluminum dialkylphosphinate composition. Interplanar spacings corresponding to two characteristic peaks with a highest relative intensity determined by XRD were 11.835Å (100%) and 9.680Å (45.1%), respectively.

The particle size of the prepared aluminum dialkylphosphinate composition was tested, and D50=17.78 µm.

Notes: The diethylphosphinate ion comprises 98 mol% of diethylphosphinate ion and 2 mol% of telomeric diethylphosphinate ion. The dibutylphosphinate ion comprises n-butyl sec-butylphosphinate ion (R₁≠R₂, which are n-butyl and sec-butyl, respectively), di-n-butylphosphinate ion (R₁=R₂=n-butyl), di-sec-butylphosphinate ion (R₁=R₂= sec-butyl) and telomeric dibutylphosphinate ion. These terms are used here and elsewhere in the present disclosure.

### Example 2

### Preparation of aluminum dialkylphosphinate composition, in which a molar ratio of aluminum diethylphosphinate of formula (I) to aluminum dibutylphosphinate of formula (II) was 2.4:1

Preparation of aluminum dialkylphosphinate composition: 180.49 g of the sodium diethylphosphinate solution (0.24 mol of phosphorus) and 109.68 g of the sodium dibutylphosphinate solution (0.12 mol of phosphorus) which were prepared by the method of Example 1 were well mixed and then slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water and then dried at 120 °C to obtain 48.56 g of white solid, the aluminum dialkylphosphinate composition.

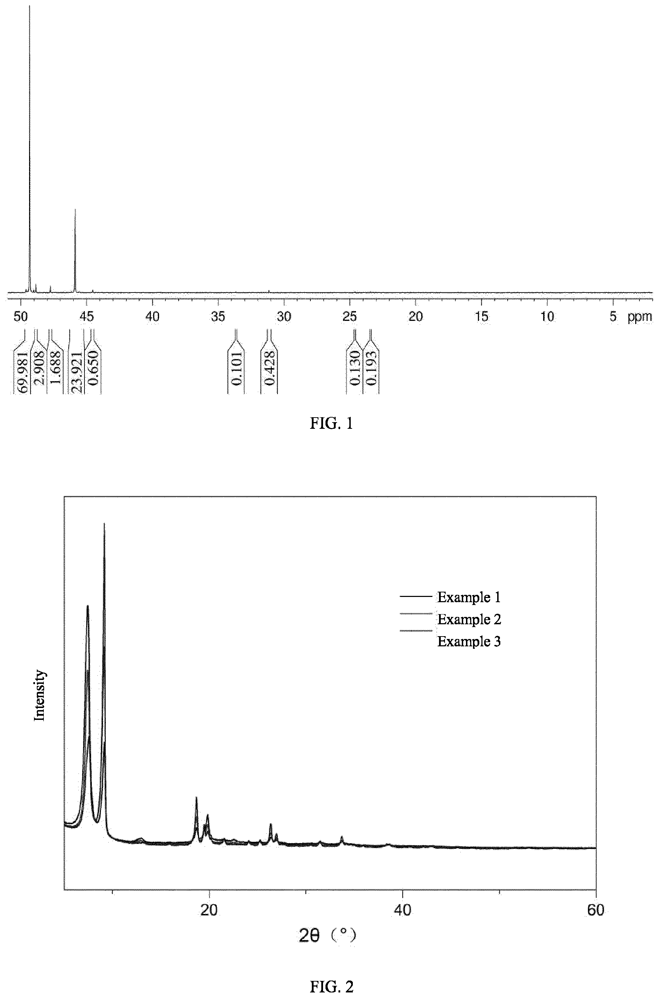

The aluminum dialkylphosphinate composition obtained in this experiment was dissolved in an aqueous solution of sodium hydroxide. Phosphorus nuclear magnetic resonance was performed, resulting in that the molar content of diethylphosphinate ion was 69.98%, the total molar content of dibutylphosphinate ion was 29.17%, and for other phosphorous-containing impurities, such as, the molar content of ethyl phosphinate ion was 0.10%, the molar content of ethylphosphonate ion was 0.13%, the molar content of butylphosphinate ion was 0.43%, and the molar content of butylphosphonate ion was 0.19%. That is, in the aluminum dialkylphosphinate composition, the molar ratio of aluminum diethylphosphinate of formula (I) to aluminum dibutylphosphinate of formula (II) was 2.4:1. The ³¹P-NMR spectrum is shown in FIG. 1.

An XRD test was performed on the the prepared aluminum dialkylphosphinate composition. Interplanar spacings corresponding to two characteristic peaks with a highest relative intensity determined by XRD were 11.867Å (78.7%) and 9.681Å (100%), respectively.

The particle size of the prepared aluminum dialkylphosphinate composition was tested, D₅₀=23.27 µm.

### Example 3

### Preparation of aluminum dialkylphosphinate composition, in which a molar ratio of aluminum diethylphosphinate of formula (I) to aluminum dibutylphosphinate of formula (II) was 3.6:1

Preparation of aluminum dialkylphosphinate composition: 203.05 g of the sodium diethylphosphinate solution (0.27 mol of phosphorus) and 82.26 g of the sodium dibutylphosphinate solution (0.09 mol of phosphorus) which were prepared by the method of Example 1 were well mixed and then slowly mixed with an aqueous solution containing 39.99 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water and then dried at 120 °C to obtain 47.72 g of white solid, the aluminum dialkylphosphinate composition.

The aluminum dialkylphosphinate composition obtained in this experiment was dissolved in an aqueous solution of sodium hydroxide. Phosphorus nuclear magnetic resonance was performed, resulting in that the molar content of diethylphosphinate ion was 78.36%, and the total molar content of dibutylphosphinate ion was 21.64%. That is, in the aluminum dialkylphosphinate composition, the molar ratio of aluminum diethylphosphinate of formula (I) to aluminum dibutylphosphinate of formula (II) was 3.6:1.

An XRD test was performed on the the prepared aluminum dialkylphosphinate composition. Interplanar spacings corresponding to two characteristic peaks with a highest relative intensity determined by XRD were 11.701Å (27.2%) and 9.659Å (100%), respectively.

The particle size of the prepared aluminum dialkylphosphinate composition was tested, D₅₀=49.20 µm.

FIG. 2 shows the XRD pattern of the aluminum dialkylphosphinate composition prepared in Examples 1-3. It can be seen from the figure that in the strongest absorption peak region, there are two independent peaks with basically constant peak values (d value), which are attributed to aluminum diethylphosphinate and aluminum dibutylphosphinate , respectively. This indicates that the composition obtained by the present disclosure is a physical mixture of diethylphosphinate and long-chain dialkylphosphinate.

### Comparative Example 1 Preparation of aluminum dibutylphosphinate

100 g of sodium hypophosphite monohydrate was dissolved in 500 g of water, and then placed into a 1 L stainless steel pressure reactor. The reactor was purged by nitrogen twice, vacuumized, and subsequently filled with butene until pressure no longer rose. A reaction solution was heated to about 90° C. Then an aqueous solution of sodium persulfate with a mass concentration of 4% was injected at a constant speed of 10 ml/h. Butene was continuously introduced into the reactor. The amount of butene introduced was measured by a gas flow meter. After 25.5 hours, the pressure of the reactor did not drop. The reaction was stopped, and a transparent reaction solution was obtained after cooled, release of pressure, N₂ purging, and discharging. 394 g of the above solution (0.3996 mol of phosphorus) was slowly mixed with an aqueous solution containing 44.38 g of aluminum sulfate octadecahydrate with a mass concentration of 10% at normal pressure. Reaction temperature was controlled to 70 °C, and a pH value was adjusted to be less than or equal to 3.0. A large amount of precipitates were obtained. After addition and mixing were completed, the temperature was held for 0.5 hour. Filtering was performed when the solution was hot. A filter cake was washed with clear water and then dried at 120 °C to obtain 67.28 g of white solid, aluminum dibutylphosphinate.

The particle size of the prepared aluminum dibutylphosphinate was tested, D₅₀=2.27 µm.

### Comparative Example 2 Preparation of aluminum dihexylphosphinate

Referring to Comparative Example 1, 1-hexene, instead of 1-butene, was used to prepare aluminum dihexylphosphinate. Because the product was slightly sticky, it was impossible to determine D₅₀ accurately.

### Comparative Example 3 Preparation of iron dihexylphosphinate

Referring to Comparative Example 1, 1-hexene, instead of 1-butene, and ferric chloride hexahydrate instead of aluminum sulfate octadecahydrate were used to prepare iron dihexylphosphinate. Because the product was slightly sticky, it was impossible to determine D₅₀ accurately.

### Example 4

Polyamide PA66, the aluminum dialkylphosphinate composition prepared in Example 1, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 5

Polyamide PA6, the aluminum dialkylphosphinate composition prepared in Example 1, and a composite antioxidant were mixed in an internal mixer at 50 rpm in a weight ratio of 79.6: 20: 0.4 at 260 °C for 5 minutes. After that, the mixture was taken out for cooling and drying. Then the mixture filled a mold and was preheated in a flat vulcanizing press at 260°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 6

Polyamide PA66, the aluminum dialkylphosphinate composition prepared in Example 2, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 7

Polyamide PA6, the aluminum dialkylphosphinate composition prepared in Example 2, and a composite antioxidant were mixed in an internal mixer at 50 rpm in a weight ratio of 79.6: 20: 0.4 at 260 °C for 5 minutes. After that, the mixture was taken out for cooling and drying. Then the mixture filled a mold and was preheated in a flat vulcanizing press at 260°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 8

Polyamide PA66, the aluminum dialkylphosphinate composition prepared in Example 3, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 9

Polyamide PA6, the aluminum dialkylphosphinate composition prepared in Example 3, and a composite antioxidant were mixed in an internal mixer at 50 rpm in a weight ratio of 79.6: 20: 0.4 at 260 °C for 5 minutes. After that, the mixture was taken out for cooling and drying. Then the mixture filled a mold and was preheated in a flat vulcanizing press at 260°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 10

Polyamide PA66, aluminum diethylphosphinate, the aluminum dibutylphosphinate prepared in Comparative Example 1, and a composite antioxidant were mixed in an internal mixer at 50 rpm in a weight ratio of 79.6:10:10:0.4 (the molar ratio of aluminum diethylphosphinate to aluminum dibutylphosphinate was 1.43:1) at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 11

Polyamide PA66, aluminum diethylphosphinate, the aluminum dibutylphosphinate prepared in Comparative Example 1, and a composite antioxidant were mixed in an internal mixer at 50 rpm in a weight ratio of 79.6:15:5:0.4 (the molar ratio of aluminum diethylphosphinate to aluminum dibutylphosphinate was 4.3:1) at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 12

Polyamide PA66, aluminum diethylphosphinate, the aluminum dibutylphosphinate prepared in Comparative Example 1, and a composite antioxidant were mixed in an internal mixer at 50 rpm in a weight ratio of 79.6:3:17:0.4 (the molar ratio of aluminum diethylphosphinate to aluminum dibutylphosphinate was 1:4) at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 V-1 (1.6 mm).

### Example 13

Polyamide PA66, zinc diethylphosphinate, the aluminum dibutylphosphinate prepared in Comparative Example 1, and a composite antioxidant were mixed in an internal mixer at 50 rpm in a weight ratio of 79.6:4.3:15.7:0.4 (the molar ratio of zinc diethylphosphinate to aluminum dibutylphosphinate was 1:2) at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 V-1 (3.2 mm).

### Example 14

Polyamide PA66, aluminum diethylphosphinate, the aluminum dihexylphosphinate prepared in Comparative Example 2, and a composite antioxidant were mixed in an internal mixer at 50 rpm in a weight ratio of 79.6:13.65:6.35:0.4 (the molar ratio of aluminum diethylphosphinate to aluminum dihexylphosphinate was 4:1) at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 V-0 (1.6 mm).

### Example 15

Polyamide PA6, aluminum diethylphosphinate, the iron dihexylphosphinate prepared in Comparative Example 3, and a composite antioxidant were mixed in an internal mixer at 50 rpm in a weight ratio of 79.6:13.5:6.5:0.4 (the molar ratio of aluminum diethylphosphinate to iron dihexylphosphinate was 4:1) at 260 °C for 5 minutes. After that, the mixture was taken out for cooling and drying. Then the mixture filled a mold and was preheated in a flat vulcanizing press at 260°C for 10 minutes and the pressure was held at 10 MPa for 5 minutes. Cold pressing was then performed. The sample was cut and tested after cooling. The flame retardant rating of the sample was UL94 V-0 (1.6 mm).

### Comparative Example 4

Polyamide PA66, aluminum diethylphosphinate, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the samples was UL94 no rating (1.6 mm and 3.2 mm).

### Comparative Example 5

Polyamide PA66, zinc diethylphosphinate, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the samples was UL94 no rating (1.6 mm and 3.2 mm).

### Comparative Example 6

Polyamide PA66, the aluminum dibutylphosphinate prepared in Comparative Example 1, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the samples was UL94 no rating (1.6 mm and 3.2 mm).

### Comparative Example 7

Polyamide PA66, the aluminum dihexylphosphinate prepared in Comparative Example 2, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the samples was UL94 no rating (1.6 mm and 3.2 mm).

### Comparative Example 8

Polyamide PA66, the iron dihexylphosphinate prepared in Comparative Example 3, and a composite antioxidant were mixed in an internal mixer at 50 rpm in a weight ratio of 79.6: 20: 0.4 at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the samples was UL94 no rating (1.6 mm and 3.2 mm).

### Comparative Example 9

Polyamide PA66, aluminum diethylphosphinate, the aluminum dibutylphosphinate prepared in Comparative Example 1, and a composite antioxidant were mixed in an internal mixer at 50 rpm in a weight ratio of 79.6:17.3:2.7:0.4 (the molar ratio of aluminum diethylphosphinate to aluminum dibutylphosphinate was 9:1) at 280 °C for 5 minutes. After that, the mixture was taken out for cooling and drying. Then the mixture filled a mold and was preheated in a flat vulcanizing press at 280°C for 10 minutes and the pressure was held at 10 MPa for 5 minutes. Cold pressing was then performed. The sample was cut and tested after cooling. The flame retardant rating of the sample was UL94 no rating (1.6 mm).

As disclosed in Comparative Examples 4-8, when used alone, aluminum diethylphosphinate, zinc diethylphosphinate, aluminum dibutylphosphinate, aluminum dihexylphosphinate and iron dihexylphosphinate have low flame retardant efficiency for polyamide, and the product of Comparative Example 6 has more dust, which is unfavorable for operation. As disclosed in Comparative Example 9, when the molar ratio of aluminum diethylphosphinate to aluminum dibutylphosphinate is too high, the flame retardant efficiency of the composition for polyamide will be reduced.

As disclosed in Examples 4-15, the dialkylphosphinic acid salt composition of the present disclosure has outstanding flame retardant efficiency for polyamide and overcomes the disadvantages of low flame retardant efficiency for polymer materials when diethylphosphinate and long-chain dialkylphosphinic acid salt are used alone. In use, the products of Examples 10-12 are significantly more dusty than those of Examples 4-9, indicating that the co-precipitation composition is better for the operating environment than the physical composition.

The foregoing descriptions are merely some examples of the present disclosure, and are not intended to limit the present disclosure in any form. Although the present disclosure has been disclosed as above by means of the preferred examples, these examples are not for limiting the present disclosure. Those skilled in the art can make certain alterations or modifications by using the technical contents disclosed above without departing from the scope of the technical solutions of the present disclosure, so as to arrive at equivalent examples, which fall within the scope of the technical solutions.

## Claims

1. A dialkylphosphinic acid salt composition, comprising component A and component B, the component A being selected from the group consisting of compounds of formula (I) and combinations thereof, the component B being selected from the group consisting of compounds of formula (II) and combinations thereof, 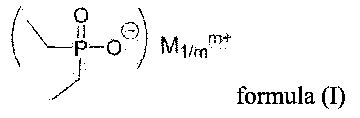 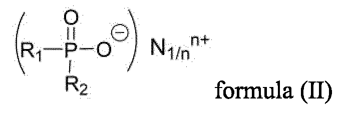
wherein M and N are central atoms; R₁ and R₂ are each independently selected from C₄-C₁₂-alkyl, and at least one of R₁ and R₂ is not isobutyl;
M and N are each independently selected from metal elements, which are selected from the group consisting of group IIA, IIIA, IVA, VA metal elements, a transition metal element, a lanthanide metal element, and combinations thereof;
m and n are valence states of metal M and N, respectively; m and n are each independently 2, 3 or 4.

2. The dialkylphosphinic acid salt composition according to claim 1, wherein a molar ratio of the component A to the component B is 1-4.5:4.5-1.

3. The dialkylphosphinic acid salt composition according to claim 1, wherein the group IIA metal element is selected from the group consisting of Be, Mg, Ca, Sr, Ba and combinations thereof;
the group IIIA metal element is Al;
the group IV A metal element is Sn;
the group VA metal element is Sb;
the transition metal element is selected from the group consisting of Fe, Zn, Cu, Ti, Zr, Mn and combinations thereof;
the lanthanide metal element is Ce.

4. The dialkylphosphinic acid salt composition according to claim 1, wherein M=N=Al, m=n=3.

5. A preparation method for the dialkylphosphinic acid salt composition according to any one of claims 1 to 4, comprising: carry out reaction I on materials, comprising a diethylphosphinic acid and/or an alkali metal salt thereof with anions in formula (I), a dialkylphosphinic acid and/or an alkali metal salt thereof with anions in formula (II), a metal element M source and a metal element N source, in an aqueous phase, to obtain the dialkylphosphinic acid salt composition;
alternatively,
mixing component A and component B to obtain the dialkylphosphinic acid salt composition, wherein
the component A is the component A according to claim 1; the component B is the component B according to claim 1.

6. The preparation method according to claim 5, wherein the reaction I is carried out at a pH of 0 to 4.

7. The preparation method according to claim 5, wherein the reaction I is carried out at 0-250°C, 0.1 MPa-10 MPa for 0.01-20 h.

8. The preparation method according to claim 5, wherein the metal element M source is selected from the group consisting of metal element M salts and combinations thereof;
the metal element N source is selected from the group consisting of metal element N salts and combinations thereof;
optionally, the metal element M salt is selected from the group consisting of nitrates, sulfates, hydrochlorides, acetates and oxides of the metal element M and combinations thereof;
the metal element N salt is selected from the group consisting of nitrates, sulfates, hydrochlorides, acetates and oxides of the metal element N, and combinations thereof.

9. A flame retardant, comprising the dialkylphosphinic acid salt composition according to any one of claims 1 to 4 and/or a dialkylphosphinic acid salt composition prepared by the method according to any one of claims 5 to 8.

10. A flame-retardant material, comprising a flame retardant P and a thermoplastic polymer material, wherein
the flame retardant P is at least one of the flame retardants according to claim 9.

11. The flame-retardant material according to claim 10, wherein a mass percent of the flame retardant P in the flame-retardant material is 1%-35%.

12. The flame-retardant material according to claim 10, further comprising a functional additive, wherein
the functional additive is selected from the group consisting of a reinforcing agent, an anti-dripping agent, a stabilizer, a pigment, a dye, a charring catalyst, a dispersant, a nucleating agent, an inorganic filler, an antioxidant and combinations thereof;
optionally, a mass percent of the functional additive in the flame-retardant material is 5%-40%.

13. The flame-retardant material according to claim 12, further comprising a flame retardant Q, wherein
the flame retardant Q is a nitrogen-based flame retardant and/or a boron-based flame retardant.

14. The flame-retardant material according to claim 13, wherein a mass percent of the flame retardant Q in the flame-retardant material is 0.5%-20%.

15. The flame-retardant material according to claim 10, wherein the thermoplastic polymer material is a polyamide and/or a polyester.
